# DEMANDE DE BREVET EUROPEEN

(11) **EP 1 004 425 A1**
(43) Date de publication de la demande: **31.05.2000**
(21) Numéro de dépôt: 98500256.7
(22) Date de dépôt: 26.11.1998
(51) Int. Cl.: B29C 51/42, B29C 51/26, B29C 51/30, B29C 51/38

(54) **Machine de thermoformage pour fabriquer des baignoires, bacs de douche et autres éléments sanitaires**

(71) Demandeur: Molde Proto, S.L., 12527 Artana, Castellon (ES)
(72) Inventeur: Verreaux, Alejandro D., 12527 Artana, Castellon (ES)
(74) Mandataire: Manzano Cantos, Gregorio

(57) **Abrégé**

Machine pour thermoformation de baignoires, bacs de douche et d'autres éléments sanitaires, intégré par deux modules (A,B) de moulage fonctionnant en alternance entre lesquels se trouve un module commun avec un jeu de plaques de chauffe qui opèrent alternativement et successivement dans un module ou l'autre. Ces modules sont équipés chacun d'une chambre de moulage, et ont un cadre fixe (3) sans moyen de fixation pour la planche thermoformable, un cadre mobile (10) qui monte et descend avec un déplacement horizontal et qui descend en appliquant une pression contre ledit cadre fixe, et comporte des moyens de fixation de la planche (16A) thermoformable qui à des marges minimales résiduelles. La chambre s'ouvre et se ferme d'une manière synchronisée aux phases de moulage-démoulage, au moyen d'une porte (9) intérieure actionnée par des mécanismes incorporés aud dos de celle-ci.

## Description

L'invention concerne, selon son titre, une machine pour moulage par thermoconformation sous vide de grandes pièces et spécialement de baignoires, bacs de douche, pans, cabines de douche et d'autres pièces de toilettes en matières plástiques telles que le métacrylate, l'ABS ou analogues.

La machine de thermoconformation sous vide, selon l'invention, est du type de machines qui, tout en utilisant un moule métallique pourvu d'un circuit pneumatique sous vide, est munie d'un mécanisme de rapprochement à la planche thermoconformable qui est pressée par le moule, et une fois chauffée à la tempérarture pour déflexion, elle moule sous vide à l'intérieur d'une chambre qui, le cas échéant, est hermétiquemente close.

La machine de thermoconformation de l'invention, présente de nombreux avantages par rapport à celles utilisées jusqu'à présent; elle est munie de deux têtes de moulage qui sont chauffées, alternativement, par un même jeu de plaques de chauffe, qui peuvent utiliser une planche ayant l'épaisseur exigée pour chaque travail; qui recquièrent des marges plus petites de surdimension de la planche, avec une économie évidente de matière vierge et de matière résiduelle; et avec des cadences de moulage supérieures puisque l'on gagne du temps à chaque procédé, en profitant des temps morts de la machine dans la deuxième phase de moulage, étant donné sa double tête.

### ETAT DE LA TECHNIQUE

En ce qui concerne le type de machine, les systèmes et les moyens estimés sont divers pour chaque cas, bien que ceux qui intéressent l'invention sont ceux qui, tout en utilisant un système de moulage par thermoconformation sous vide, conforment une planche en plastique ayant une épaisseur convenable aux dimensions et aux caractéristiques du produit et qui ont des moyens de chauffe, généralement des plaques qui consistent à des batteries intégrées par des résistances éléctriques blindées.

Indépendamment du fait que lesdites plaques transmettent uniformément de la chaleur sur toute la surface de la plaque de chauffe pour ces systèmes, la planche peut se rompre par des défauts thermiques lors de la production de zones froides; la condition masquée de ces résistances fait que les anomalies pouvant avoir lieu sur la plaque de chauffe soient difficiles de contrôler, en nécessitant un plus grand lapse de temp pour assurer le réchauffement normal et en retardant le procédé de la production des pièces.

Ces temps, dans les machines traditionnelles, ont aussi besoin des étapes nécessaires de la termoconformation; démoulage, ventilation thermique, refroidissement de la pièce et décharge, pour réinitier un nouveau cycle.

La planche a également besoin d'importantes améliorations dans les mesures originales pour permettre que le maintien de la planche et la résistance de celles-ci, soient efficaces pour le procédé de thermoconformation afin que la contraction de la planche, quand elle est par moulage ne sorte pas des bâtis qui la maintiennent à pression. El a également besoin de marges qui supposent de larges rebords et des rebords qui obligent à un traitement en profondeur (ébavurage) postérieur de la pièce.

La maintien du bâti fixe à l'armature de la table ou banc, est réalisé aussi traditionnellement au moyen de nombreux point d'arrimage, ce qui oblige, lorsqu'il est nécessaire de changer le bâti fixe, de démonter et de fixer à nouveau les points d'arrimage avec un retard évident dans les opérations de remplacement.

### ACTIVITE INVENTIVE

L'invention incorpore avantageusement deux têtes de thermoconformation, c'est-à-dire, deux modules de moulage, un à chaque extrémité de la machine qui sont alternativement chauffés par l'intermédiaire d'un jeu de plaques de chauffe qui, montées entre les deux têtes, sont déplacées alternativement pour chauffer une tête ou l'autre.

L'invention incorpore avantageusement un jeu de cadres porte-planche; l'un étant fixe et l'autre mobile, le cadrefixe étant libre de moyens de fixation et fortement pressé par le cadre mobile lorsqu'il descend pour emprisonner la planche en plastique.

Le cadre mobile de l'invention est avantageusement monté sur un jeu articulé qui est déplacé par un piston hydraulique horizontal placé sur le bâti supérieur, guidé au moyen de roues de guidage obliques pour le déplacement, par relevage excentrique, du cadre mobile Ledit cadre mobile de l'invention comporte avantageusement des moyens de pression et d'enclenchement de la planche en plastique, en la pressant en même temps contre le cadre fixe pour l'immobiliser au moyen de la forte pression exercée par le piston hydraulique qui déplace ledit cadre mobile.

L' invention incorpore avantageusement des plaques de chauffe de tubes à rayons infrarouges visibles par l'opérateur, qui pourra contrôler n'importe quelle defaillance de ceux-ci, qui sont également avantageusement montés sur une surface en acier inoxidable absorbant les charges de réchauffement de façon que, en cas de dilatation, celle-ci à lieu par expansion et non pas par déformation.

Le dépalcement des plaques est réalisé avantageusement d'une manière synchronisée au maintien de la planche en plastique, l'emplacement de ces plaques sur et sous la planche, et la fermeture simultánee de la chambre de moulage.

Un autre avantage de l'invention est le fait de disposer d'un distribuiteur du climatiseur ou réfroidisseur de façon qu'en ayant un seul alimentateur, on projette de l'air à travers les multiples buses orientables pour les diriger aux points appropriés de la pièce moulée qui est refroidie uniformément sur tout son volumen.

Un autre avantage de l'invention est le fait que les composants de fermeture de la chambre de moulage sont ouverts d'une manière synchronisée lors du démoulage pour décharger ladite chambre de la pression thermique accumulée et éviter des décharges ou des explosions et des dégâts par l'effet d'une telle concentration.

### DESCRIPTION DE L'INVENTION

La machine, selon l'invention, est une cabine symétrique pourvue de deux têtes de moulage jumelles; une à chaque extrémité, unies par une table ou banc commun comportant des longerons inférieurs qui sont des guides pour le glissement de la plaque de chauffe située, sous le cadre fixe et des longerons qui sont des guides pour le glissement de la plaque de chauffe située par dessus le cadre mobile et entre lesquels est fixée la planche en métacrylate, ABS ou matière analogue pour sa thermoconformation; de plaque qui sont montées sur des rouleaux latéraux et qui sont déplacées par l'intermédiaire de câbles en acier tirés par un tambour d'enroulement actionné par un moteur.

Les plaques de chauffe, selon l'invention, sont intégrées par une batterie de tubes à rayons infrarouges d'onde moyenne de quarz transparent avec un déflecteur enor incorporé, disposés sur des appuis céramiques successifs isolants et installés sur une base en acier inoxidable pour assurer et absorber les moments de dilatation par réchauffement, qui est réalise par expansion et non pas par déformation.

La batterie de tubes à rayons infrarouges est également visible pour l'opérateur de façon qu'à tout instant, il peut contrôler s'il y a des défaillances dans l'un d'eux qui puissent produire des zones athermiques sur la planche thermonconformée au risque de rupture audit point.

La table ou banc, selon l'invention, comporte sur chaque tête une cadre fixe faisant l'office de contre-moule.

C'est le cadre ayant la configuration et l'espace conçu selon les caractéristiques du moule, qui est, en ce cas-ci, monté sur le banc, "sans moyen de maintien" tout simplement appuyé. Sur ce cadre on place la planche en plastique thermoconformable.

Le cadre fixe en question, selon l'invention, comporte un nombre proportionnel de coussin disposés dans leur contour, sur le contour supérieur, et soudés sur celui-ci, en délimitant l'espace de la planche thermoconformable. La planche, selon l'invention, n'a besoin que de quelques centimètres (2 cm) de marge; un contour minimal résultant sur la pièce moulée et évidemment, un rebod minimualqui a besoin d'une opération élementaire et minimale d'ébavurage.

Cette faible marge a cependant besoin de moyens sûrs de fixation pour éviter que les contraintes du moulages, tirent de la planche en la démontant, en provoquant une défaillance complète lors de l'opération de moulage.

Selon l'invention on obtient aussi bien le parfait maintien de la planche que l'immobilisation du cadre fixe au moyen du cadre mobile.

Le cadre mobile, selon l'invention, est pourvu d'un jeu de bras de levier articulés sur un de ses quatre angles et guidés sur des barres longitudinales disposées sur l'armature supérieure. Le cadre mobile a des éléments roulants de guidage à chaque éxtrémité qui glissent sur des rails verticaux obliques qui obligent à un relevage excentrique du cadre pour le libérer de la tension d'entrainement.

Ce cadre mobile est monté et descendu au moyen de tels mécanismes et par l'action d'un cylindre hydraulique horizontal qui agit contre un croisillon central qui unit le jeu de bras de levier.

La presion que le cadre mobile exerce contre le cadre fixe est calculée par le cylindre hydraulique. Les contraintes du moulage ne pouvant, en aucun cas, démonter ledit cadre fixe malgré le fait de ne pas avoir de moyens propres de fixation

Le cadre mobile, selon l'invention, comporte des moyens propres de maintien de la planche en plastique termoconformable.

Ces moyens, selon l'invention, sont des barres disposées sur le chant inférieur des longerons du cadre mobile.

Les barres ont un bord inférieur formé par une rangée alignée de griffes d'enclenchement qui sont propres à s'enclencher contre le rebord de la planche en plastique termoconformable.

La barre est montée sur le cadre au moyen de vis ou de tiges verticales qui incorporent, entre celle-ci et le cadre, des ressorts d'amortissement qui peuvent régler la pression de l'enclenchement.

En ayant ainsi un reborb minimal sur la planche, il est possible de la maintenir assujetie malgré les contraintes du moulage, en économisant de la matière vierge et en éliminant des résidus en excès.

La chambre de moulage reste hermétiquement close pendant le procédé de thermoconformation. La chambre est fermée par ses trois parois externes, bien que la paroi d'extrême, est formée par des portes qui demeurent fermées, mais qui sont ouvertes complètement pour accéder au moule , principalement pour l'installer ou le desinstaller.

La paroi intérieure est cependant une vanne qui s'ouvre d'une manière synchronisée lorsque la phase de moulage ou de thermoconformation a terminée; pour évacuer la pression thermique accumulée à l'intérieur de la chambre et faciliter le refroidissement de la pièce, un climatiseur intervenant également.

Selon l'invention, la vanne s'ouvre verticalement et se ferme à pression lorsqu'elle descend, raison pour laquelle elle est munie d'un joint d'étanchéité, pour cela elle est pourvue d'une armature dorsale sur laquelle agit un piston hydraulique. La dite armature est pourvue d'une barre longitudinale guidée centralement dans un coussinet, pourvue à chaque extrémité d'un piston en prise sur des crémallères verticales fixées sur l'encadrement de ladite vanne.

Selon, il a été dit, dans le procédé de refroidissement de la pièce un climatiseur qui est pourvu d'un distribuiteur situé dans l'armature superieur intervient dans ce procédé. Ledit distribuiteur est pourvu de diverses manchettes orientables pour les diriger sur différents points de la pièce pour que le refroidissement soit uniforme. Ledit distribuiteur, un pour chaque tête de la machine a l'avantage d'être alimenté par un seul ventilateur situé à l'extérieur de la salle.

Les cycles de fabrication sont coordonnés de façon qu'ils soient successifs et continus sans pertes de temps.

Lorsque la phase de moulage termine dans une des têtes de la machine, le procédé commence automatiquemente dans l'autre. Pendant que la pièce est refroidie et retirée, le réchauffement, le moulage et le démoulage commence alors dans l'autre. La machine se disposant à recommencer le cycle complet dans la précédante.

De cette façon, s'accomplissent des cycles de fabrication tous les deux cycles, an le réduisant, selon les systèmes connus, en plus de trois ou quatre fois le temps employé dans les fabrication connues.

La précision , l'efficacité et le finissage sont avantageusement supérieurs à ce que l'on connait. On réduit aussi substantiellement les temps de remplacement du contre-moule ou du cadre fixe, étant donné qu'il n'est pas nécessaire de démonter des pièces de fixation qui l'amarre à la table de la machine.

Une idée plus large des caractéristiques essentielles de l'invention sera réalisée à la suite lorsque l'on fera référence aux feuilles de dessin qui accompagnent ce mémoire, où d'une façon un peu schématique et uniquement comme exemple, sont représentés les détails préférés de l'invention.

Dans les dessins:
La figure 1 est une vue schématique de l'ensemble de la machine coupée selon un plan vertical symétrique.

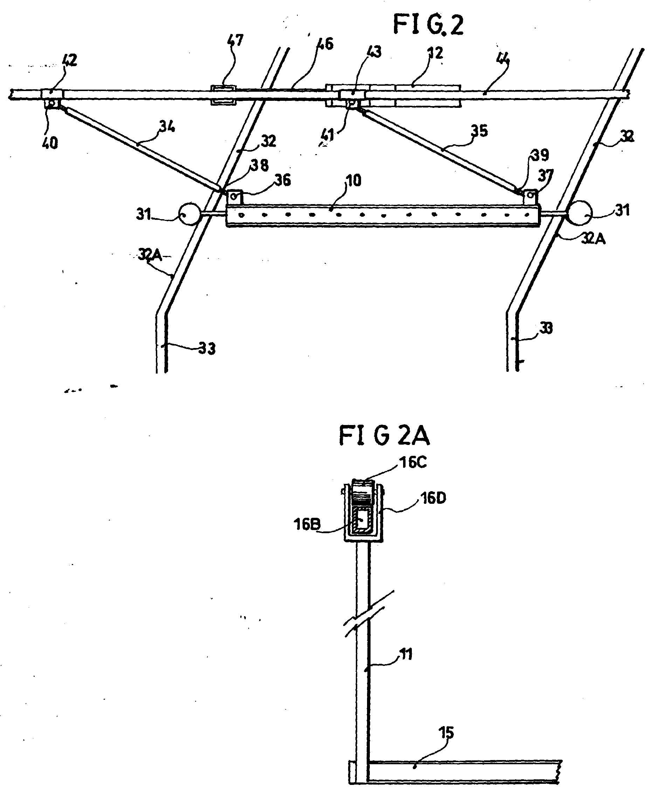

La figure 2, est un détail schématique en projection verticale des mécanismes de relevage et de descente du cadre mobile..
La figure 2A est un détail schématique de la guide supérieure de la plaque de chauffe supérieure.
La figure 3 est un détail longitudinal partiellement sectionné de la pression du cadre mobile contre le cadre fixe.
La figure 3A est un détail transversal partiellement sectionné du même objet que la figure 3.
La figure 4 est une vue partielle en proyection verticale par une des extrémités du cadre mobile.
La figure 5 est une vue semblable à la précédante, en projection latérale.
La figure 6 est un détail sectionné par la ligne I-I de la figure 5 d'une griffe d'enclenchement.

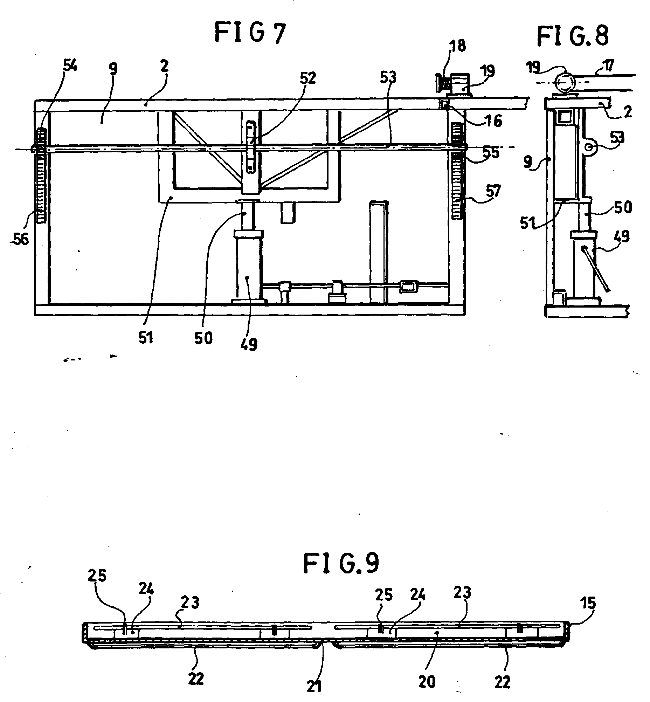

La figure 7, est une vue schématique en projection verticale de la vanne de la chambre de moulage.
La figure 8 est une vue schématiquement en projection latérale de ladite vanne.
La figure 9 est un détail schématique sectionné d'une plaque de chauffe.

### DESCRIPTION DES DESSINS

Par rapport aux différentes références, on décrira les parties de l'ensemble, selon l'invention, représentées dans les tels dessins.

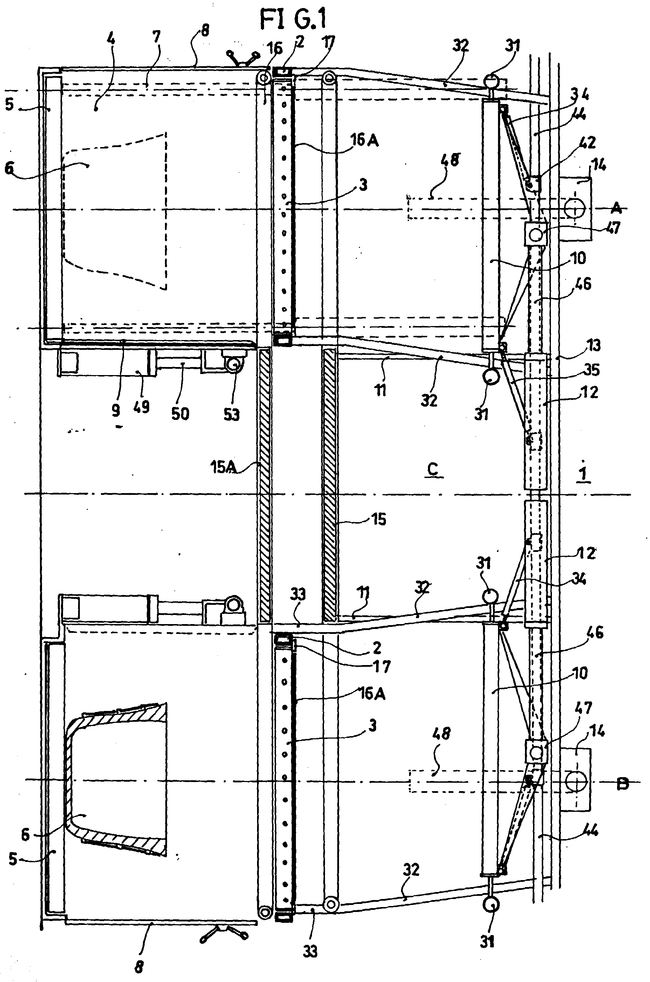

La machine (1) dans son ensemble (Fig.1), est pourvue ainsi de deux modules de moulage jumeaux, la tête (A) à une extrémité et la tête (B) à l'autre éxtrémité et entre celles-ci se trouve le module ^{©} de manoeuvre.

Chaque tête ou module (A) (B) est pourvue d'une table (2) où est monté le cadre fixe ou contre-moule (3).

Dans la partie inférieure se trouve la chambre de moulage (4) où est disposée la plateforme (5) porte-moule (6) qui est montéeet descendue par les cylindres hydrauliques (7).

La chambre (4) est fermée par des parois latérales et par des portes extérieures (8) disposées dans le pan d'extrémité et qui demeurent fermées lorsque la machine est en train de travailler mais qui peuvent s'ouvrir pour sortir ou introduire le moule (6); et qui est aussi fermée par une vanne intérieure (9) qui a des mécanismes de manoeuvre synchronisés aux opérations de la machine.

Dans la partie supérieure est monté le cadre mobile (10) qui monte et descend sur des rails (32) obliques au moyen d'un jeu de mécanismes articulés qui sont actionnés par des cylindres hydrauliques (12) montés horizontalement dans la structure supérieure (13) de la machine (12) où sont aussi incorporés des distribuiteurs (14) pour la multiventilation de la pièce thermoconformée (moulée).

Dans les phases non operationnelles, les plaques de chauffe (15) (15A) se trouvent dans le module ^{©} de manoeuvre. Les plaques (15) (15A) sont giudées sur des rails horizontaux (16) inférieurs et (16B) supérieurs respectivement sue lesquels ils glissent pour se déplacer vers la tête (A) ou vers la tête (B). Ce sont des plaques (15) et (15A) parallèles situées sous le cadre fixe (3) et par dessus le cadre mobile (10), losque celui-ci est en bas, pour chauffer, des deux côtés, la planche en plastique (16A) thermoconformable.

La planche en plastique (16A) aura l'épaisseur recquise, selon la pièce à mouler. La planche (16A) est placée sur le cadre fixe (3) en l'appuyant contre ce dernier. Le cadre (10) lorsqu'il descend, il s'appuie et presse contre ledit cadre (3), en l'immobilisant, et contre les bords de la planche (16A) en la maintenant fermement au moyen d'éléments spéciaux de fixation.

Le cadre fixe (3) ne précise pas de moyens de fixation, il est muni de coussins (17) répartis sur le contour dudit cadre fixe (3) sur lesquels le cadre mobile (10) appui et presse.

Les plaques de chauffe (15-15A) glissent sur les rails (16) inférieurs et (16B) supérieurs au moyen d'éléments de roulement (16C) incorporés latéralement et au moyen de câbles en acier tendu (17), ce qui assure l'absence de rupture, à travers el tambour (18) qui est actionné par un moteur (16) monté aux extrémités des guides (16), et qui est synchronisé aux opérations de la machine.

Les élément de roulement (16C) de la plaque de chauffe supérieure (15) sont intégrés dans une fourche (16C) située à l'extrémité supérieure des soutiens (11) qui supportent la plaque (15) et qui sont suspendus du rail supérieur (16B).

Les plaques de chauffe (15) (15A) son intégrées par des plateaux (20) ayant une base en acier inoxidable (21) fermés para des contre-plaques (22) où se trouve enfermé le circuit de connexions. Sur ladite base (21) sont montées les batteries de tubes à rayons infrarouges (23) d'onde moyenne et de cristal de quarz avec un noyau en or, montés sur les réfractaires (24) et les connecteurs (25). La base inox (21) garantit l'absortion de réchauffements en les diffusant par expansion sur toute la surface inox et en évitant la deformation.

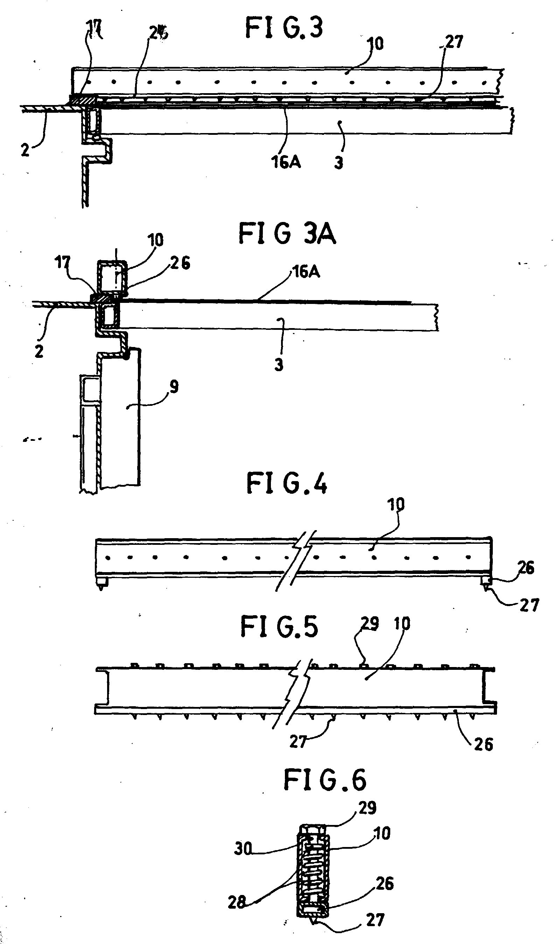

En retournant au cadre mobile (10), nous constatons que celui-ci incorporent avantageusement (figure 3, 4 et 5) des moyens espacés de maintien ou d'emprisonnement de la planche thermoconformable (16A), concrètement des barres (26) de griffes ou crampons (27) montées sur le chant inférieur des longerons du cadre mobile (10), au moyen de tiges ou de vis (30) qui ont une tête (29) de reglaje et un ressort (28) incorporé entre celle-ci et la barre (26) pour régler la tensión de celle-ci et par conséquent, la presión des griffes ou crampons (27) contre la planche (16A).

Lesdites griffes ou crampons (27) s'enclenchent sur la planche thermoconformable (16A) dans la mesure où l'é paisseur de celle-ci le permette, les ressorts (28) y et les régulateurs (29) permettant une tensión appropriée de ceux-ci. L'enclenchement recquiert une marge minimale de la planche (16A), alors on élimine les grandes marges recquises par les procédés de fabrication actuels.

Le cadre mobile (10) Fig. 3) est pourvu à ses extrémités d'éléments de roulement (31) qui glissent sur les rails (32) disposés entre la table (2) et la structure supérieure (13). Ces rails ont une projection oblique (32A) sauf dans une courte tranche inférieure (32) qui est droite, perpendiculaire à la table (2). La tranche oblique (32A) est prévue pour provoquer le déplacement excentrique sur le plan horizontal lorsque le cadre (33) est relevé, et lorsqu'il est descendu la tranche droite (33) est pour assurer la pression du cadre mobile (10) contre le cadre fixe.

Le cadre mobile (10) es manoeuvré par un mécanisme conjoint d'un jeu de leviers (34 et 35) qui, par l'extrémité inférieure sont arrimés et articulés à des arrimages (36, 37) du cadre (10), avec des régulateurs respectifs (38 et 39) et avec des arrimages respectifs (40 et 41) à la partie supérieure avec des anneau de serage (42 et 43) montés sur une barre guide (44) étendúe longitudinalement; dont le mécanisme est ationé par de cylindre hydraulique (12) et un plongeur respectif (46) qui sont montés horizontalement et arrimés au croisillon (47) de l'armature relié au jeu de leviers (34 et 35).

Dans la structure supérieure (13) dans chaque tête ou module (A-B) est installé un distribuiteur (14) de ventilation. Ledit distribuiteur est alimenté par un ventilateur monté à l'extérieur et pourvu de multiples manchettes orientables (48) qui peuvent être dirigées à différents points de la table (2) de thermoconformation, pour refroidir d'un manière uniforme et rapide la pièce thermoconformée.

La vanne intérieure (9) ferme hermétiquement la chambre de moulage (4). La fermeture et l'ouverture sont réalisées automatiquement aussitôt que l'opération de moulage commence et termine respectivement.

La fonction est réalisée au moyen de cylindres hydrauliques (49) et le plongeur respectif (50) arrimé à une armature dorsale (51) de la vanne (9) qui comporte centralement un coussinet (52) pour guider un mandrin longitudinal (53) qui, à ces extrémités respectives, comporte des pignons (54-55) respectivement en prise sur des crémallères (56-57) adossées verticalement à la jambes de la structure de la table (2). Evidemment la vanne s'ouvre et se ferme verticalement.

De cette façon, de forme synchronisée aux phases de moulage-démoulage la chambre (4) restera hermétiquemente close ou s'ouvrira suffisemment pour libérer les gaz accumulés par suite de la concentration thermique de l'opération de moulage, en coopérant avantageusement pour l'opération de refroidissement de la pièce moulée.

Une fois décrite convenablement la nature du modèle, on constate aux effets appropriés, que celui-ci ne se limite pas aux détails exacts de cette exposition, mais au contraire, on y introduira les modifications que l'on considère opportunes, toutefois que celà ne modifie pas les caractéristiques essentielles de celui-ci, que l'on revendiquent à la suite.

## Revendications

1. MACHINE POUR THERMOCONFORMATION DE BAIGNOIRES, BACS DE DOUCHE ET D'AUTRES ELEMENTS SANITAIRES, du type pourvu d'un cadre ou contre-moule fixe (3) et d'un cadre ou contre-moule mobile (10), entre lesquels est placée la planche plastique en métacrylate, ABS ou autres (16A) thermoconformable qui est chauffée par deux plaques de chauffe (U15-15A), une par dessus le cadre mobile (10) et l'autre sous le cadre fixe (3) dans la chambre de moulage respective (4) où sont disposés les moules respectifs (6) selon les caractéristiques de la pièces et ceux-ci sont disposés sur des plateformes (6) qui, au moyen de colonnes hydrauliques et des plongeurs respectifs (7), font monter et descendre ledit moule (6), étant caractérisée en ce que la machine (1) dans son ensemble est intégrée par deux modules ou têtes de thermoconformation (A-B) situés des deux côtés de la structure de celle-ci et séparés par un module central ^{©} équivalent, où restent localisée les plaques de chauffe (15-15A) dans leurs phases non opérationnelle ou pauses opérationnelles.
- où lesdites plaques de chauffe (15-15A) ont des moyens d'entrainement et de glissement réversibles pour se déplacer indistinctement et alternativement au module (A) ou au module (B)..
- des plaques de chauffe (15-15A) à rayons infrarouges.
- un cadre fixe ou inamovible (3) sans moyens de fixation
- un cadre fixe ou inamovible (3) qui est fixé par la presión du cadre mobile (10).
- un cadre mobile (10) qui a un jeu articulé de mécanismes pour relevage et descente qui est actionné par des moyens hydrauliques installés horizontalement dans la structure (13) supérieure de la machine (1).
- un cadre mobile (10) qui comporte des barres longitudinales avec des griffes ou des crampons pour le maintien de la planche plastique thermoconformable (16A).
- une planche thermoconformable (16A) qui a des marges résiduelles minimales.
- une structure supérieure (13) qui comporte de multiples moyens orientables de ventilation de la pièce moulée.
- une chambre de moulage (4) qui se ferme hermétiquement au moyen de vannes internes (9) qui s'ouvrent et se ferment d'une façon synchronisée aux phases de moulage-démoulage au moyen de mécanismes installés sur la paroi dorsale de celles-ci.

2. MACHINE POUR THERMOCONFORMATION DE BAIGNOIRES, BACS DE DOUCHE ET D'AUTRES ELEMENTS SANITAIRES, selon la revendication 1, les modules (A) (B) pour thermoconformation sont CARACTÉRISÉS par le fait qu'il opèrent alternativement et synchronisément.en initiant une phase opérationnelle, aussitôt que la précédente entre en phase non opérationnelle.

3. MACHINE POUR THERMOCONFORMATION DE BAIGNOIRES, BACS DE DOUCHE ET D'AUTRES ELEMENTS SANITAIRES, selon la revendication 1, les moyens d'entrainement des plaques de chauffe (15-15A) sont CARACTÉRISÉS en ce qu'elles sont composées de tambours (18) de fil en acier tressé (incassable) (17) actionné par des éléments moteurs indépendants (19) mais synchronisés aux opérations de la machine (1) et installés aux extrémités des guides (16) (16B), sous la tables (2) et des guides situées par dessus la structure supérieure (13) respectivement.

4. MACHINE POUR THERMOCONFORMATION DE BAIGNOIRES, BACS DE DOUCHE ET D'AUTRES ELEMENTS SANITAIRES, selon les revendications 1 et 3 les plaques de chauffe (15-15A) sont CARACTÉRISÉES en ce que elles sont composées d'une batterie de tubes à rayons infrarouges (23) d'onde moyenne en cristal de quarz et d'un noyau en or.

5. MACHINE POUR THERMOCONFORMATION DE BAIGNOIRES, BACS DE DOUCHE ET D'AUTRES ELEMENTS SANITAIRES, selon les revendications 1, 3 et 4 les plaques de chauffe (15-15A) sont CARACTÉRISÉES en ce que les tubes à rayons infrarouges (23) sont montés sur un plateau (20) sur des noyeaux réfractaires (24) et un connecteur respectif (25) disposés sur une base en acier inoxidable (21) indéformable par réchauffement et extérieurement recouvert par des contre-plaques respectives (22) pour connexion.

6. MACHINE POUR THERMOCONFORMATION DE BAIGNOIRES, BACS DE DOUCHE ET D'AUTRES ELEMENTS SANITAIRES, selon la revendication 1, le cadre fixe ou inamovible (3) sans moyens de fixation, est CARACTÉRISÉ en ce que le contour supérieur est pourvu d'une série de coussins (17) répartis et équidistants les uns des autres, pour que le cadre mobile (10) appuie et presse sur ceux-ci.

7. MACHINE POUR THERMOCONFORMATION DE BAIGNOIRES, BACS DE DOUCHE ET D'AUTRES ELEMENTS SANITAIRES, selon la revendication 1 et 6 le jeux de mécnisme de relevage et de descente du cadre mobile (10) est CARACTÉRISÉ en ce que il comprend un jeu de bras de levier (34-35) arrimés et articulés (36-37) aux extrémités du cadre mobile (10) avec un régulateur respectif (38-39) et arrimés et articulés (40-41) chacun à un anneau de serrage (42.43) giudés sur une barre guide supérieure (44) qui sont unis par un croisillon (47) où est monté l'extrémité du plongeur (46) d'un cylindre horizontal (12) monté sur la structure supérieure (13).

8. MACHINE POUR THERMOCONFORMATION DE BAIGNOIRES, BACS DE DOUCHE ET D'AUTRES ELEMENTS SANITAIRES, selon les revendication 1, 6 et 7, le cadre mobile (10) est CARACTÉRISÉ en ce que il est pourvu d'éléments de roulement (31) disposés dans les angles du cadre, séparés de ceux-ci et guidés sur des rails verticaux obliques (32), ayant une tranche longue (32A) incliné vers le haut et une tranche courte inférieure droite (33) pour assurer, respectivement, le reploiement ascendant du cadre mobile (10) et la pression contre le cadre fixe (3) dans une action descendante.

9. MACHINE POUR THERMOCONFORMATION DE BAIGNOIRES, BACS DE DOUCHE ET D'AUTRES ELEMENTS SANITAIRES, selon les revendications 1, 6, 7 et 8 un cadre mobile (10) ayant des moyens de maintien de la planche thermoconformable (16A) sont CARACTÉRISÉS en ce qu'ils sont pourvus de barres prismatiques (26) adossées au chant inférieur des longerons du cadre mobile (10), qui est assujeti avec de nonbreuses vis ou tiges traversantes (30), pourvues de tête de réglage (29) et de ressorts de tension (28) intercalés entre celle-ci et la barre (26) et en ce que , essentiellemente il est pourvu sur le bord extérieur d'une rangée de griffes ou crampons (27) pour s'¡enclencher dans les marges minimales de la planches thermoconformables (16A).

10. MACHINE POUR THERMOCONFORMATION DE BAIGNOIRES, BACS DE DOUCHE ET D'AUTRES ELEMENTS SANITAIRES, selon la revendication 1, les moyens de ventilation de la pièces thermoconformables, sont CARACTÉRISÉS en ce qu'ils sont composés par un distribuiteur (14) monté sur la partie supérieure de chaque module (A-B), alimenté par un ventilateur ou cyclone extérieur et muni de multiples manchettes (48) descendantes et orientables vers les différents points de la pièces thermonconformée.

11. MACHINE POUR THERMOCONFORMATION DE BAIGNOIRES, BACS DE DOUCHE ET D'AUTRES ELEMENTS SANITAIRES, selon la revendication 1, la vanne (9) qui ouvre intérieurement la chambre de moulage (4) et qui s'ouvre ou se ferme d'une façon synchronisée aux
phases operationnelles du moulage-démoulage est CARACTÉRISÉE en ce que elle est pourvue d'un équipement hydraulique (49) ayant un plongeur respectif (50) qui agit sur une armature (51) dorsale de la vanne (9), qui est pourvue centralement d'un coussinet (52) où il guide un mandrin (53) qui s'étend d'une extrémité à l'autre de la vanne (9) en comportant des pignons respectif (54-55) qui son en prise sur la crémaillère correspondante (54-57) disposée sur les jambes du creux de ladite vanne,
